# EUROPÄISCHE PATENTANMELDUNG

(11) **EP 2 800 031 A1**
(43) Veröffentlichungstag der Anmeldung: **05.11.2014**
(21) Anmeldenummer: 14166843.4
(22) Anmeldetag: 02.05.2014
(51) Int. Cl.: G06Q 10/00, G09F 3/00

(54) **Verfahren zum Bereitstellen maschinenspezifischer Handlungsoptionen und/oder Informationen**

(30) Priorität: 03.05.2013 DE 102013208123
(71) Anmelder: Homag Holzbearbeitungssysteme GmbH, 72296 Schopfloch (DE)
(72) Erfinder: Homeier, Achim, 72296 Schopfloch (DE); Spöcker, Julian, 72296 Schopfloch (DE); Jagelki, Lothar, 72296 Schopfloch (DE)
(74) Vertreter: Hoffmann Eitle

(57) **Zusammenfassung**

Die vorliegende Erfindung betrifft ein Verfahren zum Bereitstellen maschinenspezifischer Handlungsoptionen, insbesondere Serviceoptionen, und/oder Informationen für eine Werkzeugmaschine zur Bearbeitung von Werkstücken, die bevorzugt zumindest teilweise aus Holz, Holzwerkstoffen, Kunststoff oder dergleichen bestehen. Das Verfahren umfasst die schritte: Detektieren einer Maschinenkennung mittels eines Endgerätes; Übermitteln der detektierten Maschinenkennung von dem Endgerät an ein virtuelles Serviceportal über ein Datenübertragungssystem, insbesondere über eine Datenleitung und besonders bevorzugt über eine Internetleitung; Erzeugen von maschinenspezifischen Handlungsoptionen und/oder Information in dem virtuellen Serviceportal auf Basis der durch die Maschinenkennung identifizierten Maschine; übermitteln der erzeugten maschinenspezifischen Handlungsoptionen und/oder Informationen an das Endgerät und Anzeige von zumindest einem Teil dieser auf dem Endgerät.

## Beschreibung

### Technisches Gebiet

Die vorliegende Erfindung betrifft ein Verfahren zum Bereitstellen maschinenspezifischer Handlungsoptionen und/oder Informationen gemäß Patentanspruch 1.

### Stand der Technik

Hersteller von Werkzeugmaschinen bieten ihren Kunden im Allgemeinen einen After-Sales-Service an, der dem Kunden technische und kaufmännische Dienstleitungen sowie produktbezogene Informationen bereitstellt. Zu diesen Dienstleistungen und Informationen zählen beispielsweise Wartungs- und Reparaturdienste, eine produktspezifische Ersatzteilbeschaffung sowie Informationen hinsichtlich beispielsweise Maschinenupgrades oder maschinenspezifischen Erweiterungsoptionen. Im Allgemeinen sind solche Dienstleistungen und Informationen nach Maschinenbaureihe bzw. Maschinentyp strukturiert, sodass beispielsweise jedem Maschinentyp eine spezifische Servicerufnummer zugeordnet ist. Der Zugang zu diesen maschinenspezifischen Dienstleitungen sowie Informationen wird dem Kunden dabei im Allgemeinen über einen Webserver (Internetseite) ermöglicht, wobei der Kunde hier aus einer Vielzahl von Dienstleitungen und Informationen die für sein Produkt relevanten Informationen heraussuchen muss.

Diese derzeitigen Verfahren und Systeme sind wenig kundenfreundlich, da der Kunde zusätzlichen Aufwand betreiben muss, um für seine Maschine relevante Informationen und Dienstleistungen aus der Vielzahl von Informationen und Dienstleistungen herauszufiltern. Ferner kann es vorkommen, dass der Kunde gewisse Dienstleitungen und/oder Informationen nicht auffindet und/oder es zu Fehlzuordnungen kommt. So hat es sich beispielsweise gezeigt, dass Kunden häufig falsche Servicerufnummer heraussuchen und es damit zu unnötigen sowie zeit- und kostenintensiven Anrufweiterleitungen kommt. Insgesamt lässt sich festhalten, dass bestehende Verfahren und Systeme der eingangs genannten Art zu einem ineffizienten After-Sales-Service sowie einer mangelhaften Kundenbetreuung führen.

### Darstellung der Erfindung

Es ist daher Aufgabe der vorliegenden Erfindung ein Verfahren bereitzustellen, mit welchem ein effizienterer und kundenfreundlicherer After-Sales-Service erzielbar ist.

Der Erfindung liegt der Gedankte zu Grunde, dem Kunden die Last des Herausfilterns von für seine Maschine relevanten Handlungsoptionen und Informationen aus der Vielzahl von Handlungsoptionen und Informationen zu nehmen und ihm diese zusammengestellt zuzustellen, um so ein kundenfreundlicheres und effizienteres Verfahren bereitzustellen.

Erfindungsgemäß erfordert dieses Verfahren das Detektieren einer auf der Kundenmaschine vorhanden Maschinenkennung mittels eines Endgeräts. Anschließend wird diese detektierte Maschinenkennung von dem Endgerät über ein Datenübertragungssystem, welches insbesondere eine Datenleitung und besonders bevorzugt eine Internetleitung ist, an ein virtuelles Serviceportal übertragen. Hier werden nun maschinenspezifische Handlungsoptionen und/oder Informationen auf Basis der durch die Maschinenkennung identifizierten Maschine erzeugt, welche anschließend an das Endgerät übermittelt werden und auf diesem zumindest zum Teil angezeigt werden. Solch ein Verfahren führt zu dem Vorteil, dass der Anwender bzw. Kunde die Zuordnung von Handlungsoptionen und/oder Informationen zu seiner spezifischen Maschine nicht selber auszuführen hat, sondern ihm eine für ihn spezifische Zusammenstellung zugestellt wird. Dies minimiert das Risiko einer Fehlerzuordnung und erhöht die Serviceeffizienz sowie Kundenfreundlichkeit.

Gemäß einer bevorzugten Ausführungsform handelt es sich bei der Maschinenkennung um einen Bildcode, insbesondere ein QR-Code, der über eine Kamera des Endgeräts detektiert wird. Solch eine Maschinenkennung ist besonders kostengünstig und einfach herstellbar, da beispielsweise lediglich ein Aufkleber mit einem darauf enthaltenen maschinenspezifischen Code an der Maschine vorzusehen ist. Ferner ist solch ein Bildcode einfach auswechselbar, was beispielsweise eine Änderung der Produktkennung kostengünstig und einfach ermöglicht. Darüber hinaus ermöglicht die Detektion per Kamera eine berührungslose und bedienerfreundliche Detektion, die darüber hinaus mit einem geringen Kostenaufwand realisierbar ist.

Gemäß einer weiteren bevorzugten Ausführungsform ist das Endgerät ein mobiles Endgerät, insbesondere Mobiltelefon, Smartphone oder Tabletcomputer. Solch eine Ausgestaltung ermöglicht das Verwenden von im Allgemeinen bereits beim Anwender vorhandenen Endgeräten, was damit für den Anwender besonders kostengünstig ist, da keine neue Hardware anzuschaffen ist. Ferner ermöglicht die Detektion per mobilen Endgerät eine Detektion von verschiedenen Maschinen, die beispielsweise in einer Maschinenhalle angeordnet sind, mit nur einem Endgerät, da das Endgerät von dem Anwender von einer zur anderen Maschine mitgeführt werden kann.

Gemäß einer weiteren bevorzugten Ausführungsform umfassen die maschinenspezifischen Handlungsoptionen und/oder Informationen eine maschinenspezifische Servicerufnummer. Solch eine Ausgestaltung umgeht die bereits zuvor genannte Fehlzuordnung von Servicerufnummer zu dem jeweiligen Maschinentyp des Anwenders, was wiederum zu einem schlankeren sowie effizienteren und darüber hinaus kundenfreundlicheren Service führt.

Gemäß einer weiteren bevorzugten Ausführungsform umfassen die erzeugten maschinenspezifischen Handlungsoptionen und/oder Informationen eine Bilderübertragungsoption von dem mobilen Endgerät an eine Servicestelle, die bevorzugt durch die maschinenspezifische Servicerufnummer kontaktierbar ist, wobei die Bilderübertragung bevorzugt in Echtzeit während eines Servicetelefonats mit dieser Servicestelle erfolgen kann. Diese bevorzugte Ausgestaltung ermöglicht eine Bildübertragung von dem mobilen Endgerät zu einer Servicestelle, wodurch beispielsweise eine zeitgenaue Visualisierung von Servicefällen möglich ist. Dies wiederum ermöglicht beispielsweise eine Fernwartung durch einen Servicetechniker, was zu einem schnelleren, kostengünstigeren und damit kundenfreundlicheren Wartungsprozess führt.

Gemäß einer weiteren bevorzugten Ausführungsform umfassen die maschinenspezifischen Handlungsoptionen und/oder Informationen eine Zusammenstellung von maschinenspezifischen Ersatzteilen und bevorzugt eine Bestellmöglichkeit derer. Solch eine Ausgestaltung ermöglicht dem Kunden bzw. Anwender eine kundenfreundliche Ersatzteilbestellung, da er auf einfach Weise eine für ihn relevante Zusammenstellung von Ersatzteilen bereitgestellt bekommt und diese nicht selber aus einem Ersatzteilportal heraussuchen muss. Ferner eröffnet sich so für den Hersteller bzw. Ersatzteilevertreiber ein neuer Vertriebskanal.

Gemäß einer weiteren bevorzugten Ausführungsform umfassen die erzeugten maschinenspezifischen Handlungsoptionen und/oder Informationen eine Option zur standardisierten Störungserfassung der Maschine. Solch eine Ausgestaltung ermöglicht beispielsweise ein standardisiertes Durchlaufen eines Störungserfassungsprozesses, was wiederum eine einfache, kostengünstige sowie kundenfreundliche und schnelle Störungsidentifikation ermöglicht.

Gemäß einer weiteren bevorzugten Ausführungsform umfassen die maschinenspezifischen Handlungsoptionen und/oder Informationen Wartungs- und/oder Inspektionsanweisungen. Durch solch eine Ausgestaltung werden dem Kunden auf einfache, kostengünstige und kundenfreundliche Weise Anweisungen zur Wartung der Maschine und/oder Inspektion der Maschine zugespielt, was wiederum den Einsatz von Servicetechnikern minimieren kann und damit zu einem effizienteren Wartungs- und Inspektionsprozess führt.

Gemäß einer weiteren bevorzugten Ausführungsform umfassen die maschinenspezifischen Handlungsoptionen und/oder Informationen eine Option zur Maschinensteuerung der Maschine. Solch eine Ausgestaltung ermöglicht dem Kunden von seinem Endgerät die Maschine zu steuern. Dies ermöglicht beispielsweise eine Steuerung von unterschiedlichen Maschinen mit nur einem Endgerät, was zu einer kostengünstigen, flexiblen und kundenfreundlichen Maschinensteuerung führt.

Gemäß einer weiteren bevorzugten Ausführungsform umfassen die maschinenspezifischen Handlungsoptionen und/oder Informationen eine Option zum automatischen Erzeugen einer Serviceanfrage. Dies wiederum vereinfacht den Serviceprozess und führt darüber hinaus zu einer optimalen Kanalisierung von Serviceanfragen zu den zuständigen Servicestellen.

Gemäß einer weiteren bevorzugten Ausführungsform umfassen die maschinenspezifischen Handlungsoptionen und/oder Informationen Maschinenkennzahlen und/oder Auslastungsprofile der Maschine. Solch eine Zusammenstellung von maschinenspezifischen Informationen gibt dem Nutzer bzw. Kunden beispielsweise die Möglichkeit, die Auslastung seiner Maschine zu überwachen bzw. zu optimieren.

Gemäß einer weiteren bevorzugten Ausführungsform umfassen die maschinenspezifischen Handlungsoptionen und/oder Informationen, Informationen und/oder Neuigkeiten des Maschinenherstellers und/oder eines verwandten Unternehmens der Maschine. Solch eine Ausgestaltung ermöglicht dem Hersteller und/oder eines verwandten Unternehmens der Maschine dem Kunden für ihn relevante Neuigkeiten und Informationen z.B. zu Werbezwecken zuzustellen.

### Kurze Beschreibung der Zeichnungen

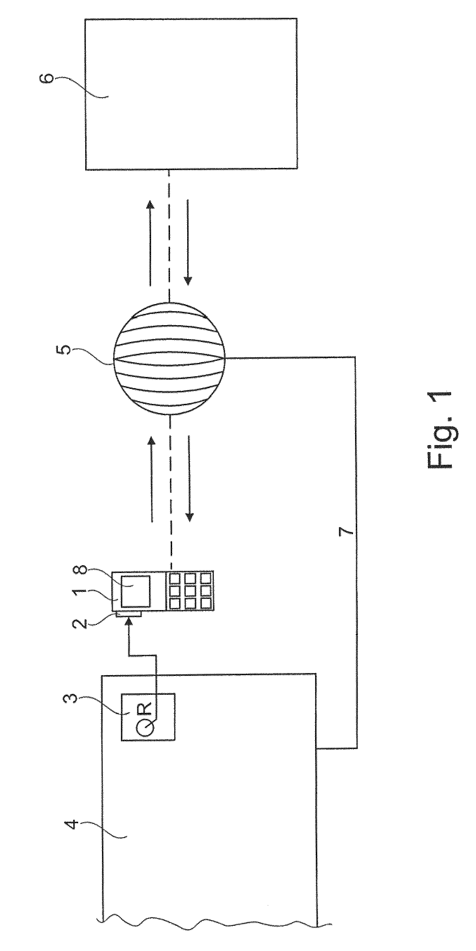

Figur 1 zeigt schematisch den Aufbau eines Systems der vorliegenden Erfindung

### Detaillierte Beschreibung einer bevorzugten Ausführungsform

Im Folgenden wird eine bevorzugte Ausführungsform der vorliegenden Erfindung unter Bezugnahme auf die beigefügte Figur 1 beschrieben.

In dieser bevorzugten Ausführungsform wird das Verfahren der vorliegenden Erfindung mit Hilfe einer auf einem Smartphone 1 installierten App ausgeführt. Bei dem Smartphone 1 handelt es sich um ein handelsübliches Smartphone, wie beispielsweise ein I-Phone, das eine Kamera 2 aufweist. Mit der Kamera 2 des Smartphones 1 wird über die auf dem Smartphone 1 installierte App eine maschinenspezifische Kennung, hier ein QR-Code, einer Maschine 4 gelesen.

Die App des Smartphones 1 übermittelt diese Maschinenkennung anschließend über eine Internetleitung 5 an ein virtuelles Serviceportal 6. Bei dem virtuellen Serviceportal 6 handelt es sich in der vorliegenden Ausführungsform um einen Internetserver des Maschinenherstellers. Auf diesem Internetserver sind jegliche Serviceoptionen und Informationen für alle Produkte des Herstellers hinterlegt. Diese Serviceoptionen und Informationen beinhalten beispielsweise Servicerufnummern für verschiedene Maschinentypen und verschiedene Serviceanfragen, Ersatzteile für das gesamte Maschinenportfolio des Herstellers, Wartungsund Inspektionsanweisungen für jegliche Maschinen des Herstellers, Optionen zum Ändern von Steuerungsparametern sowie Maschinenupdates für jegliche Maschinen des Herstellers, die Möglichkeit einer elektronischen Serviceanfrage sowie Herstellerinformationen, Werbung usw..

Auf dem Herstellerserver 6 wird die über die Internetleitung 5 übermittelte und durch das Smartphone 1 detektierte Maschinenkennung 3 ausgewertet, um so den dazu gehörigen Maschinentyp bzw. die dazugehörigen Maschine 4 zu identifizieren. Auf Basis dieser Identifikation werden daraufhin Handlungsoptionen und Informationen für diese spezifische identifizierte Maschine erzeugt. Genauer gesagt werden aus dem Gesamtportfolio von Handlungsoptionen und Informationen jene herausgefiltert, welche für die identifizierte Maschine von Relevanz sind.

In der vorliegenden Ausführungsform umfassen diese Handlungsoptionen und Informationen eine maschinenspezifische Servicerufnummer, über die der Kunde bzw. Anwender Kontakt mit der für diese Maschine zuständigen Servicestelle aufnehmen kann. Darüber hinaus wird eine Option bereitgestellt, über die der Anwender während eines Telefonats mit der zuständigen Servicestelle über die Kamera 2 des Smartphones 1 Bilder in Echtzeit an den Servicestelle übertragen kann, sodass beispielsweise eine Fernwartung der Maschine 4 durch die Servicestelle möglich ist. Darüber hinaus wird eine Option bereitgestellt, über die der Kunde bzw. Anwender für seine Maschine relevante Ersatzteile aufgelistet bekommt und diese - ähnlich zu einem Onlineshopbei Interesse umgehend erwerben kann.

Ferner umfassen die Handlungsoptionen eine Option, mit welcher über das Smartphone 1 die Maschine 4 gesteuert werden kann. Bei dieser Option wird dem Anwender auf dem Display 8 des Smartphones eine für diese Maschine spezifische Steuerungsoberfläche angezeigt, über welche der Anwender Steuerungsbefehle erzeugen kann, welche an den Herstellerserver 6 übermittelt werden und von hier anschließend über eine Internetleitung 7 an die Maschine 4 gesendet werden, um daraufhin entsprechende Zustandsänderungen in der Maschine 4 zu erzeugen.

Darüber hinaus umfassen die Handlungsoptionen eine Option zum automatischen Erzeugen einer Serviceanfrage. Diese Option ermöglicht das Erzeugen einer Serviceanfrage und die automatische Zustellung derer zu der entsprechend zuständigen Servicestelle.

Die Handlungsoptionen und Informationen umfassen ferner herstellerrelevante Informationen oder Informationen zu mit der Maschine verwandten Unternehmen. Ebenso werden Informationen zur Maschinenauslastung und maschinenspezifischen Parametern bereitgestellt. Ferner umfassen die Informationen maschinenspezifische Wartungs- und Inspektionsanweisungen oder maschinenspezifische Anpassungsanweisungen, die ein Anwender beispielsweise eigenständig durchführen kann bzw. durch die ein Anwender beispielsweise eigenhändig gewisse Wartungsarbeiten durchführen kann oder ein Servicetechniker schnell und komfortabel Zugriff auf für einen Service erforderliche Informationen bekommt.

Ebenso wird eine Option zur standardisierten Störungserfassung bereitgestellt, bei welcher der Anwender einen standardisierten Prozess durchläuft, beispielsweise eine bestimmte Abfolge von Fragen, um so Störungen effizient und schnell lokalisieren zu können.

Diese auf dem Herstellerserver 6 erzeugten maschinenspezifischen Handlungsoptionen und Informationen werden nun in einem nächsten Schritt über die Internetleitung 5 an das Smartphone 1 übermittelt. Auf dem Smartphone 1 ermöglicht die App, dass diese Handlungsoptionen bzw. Informationen dem Anwender auf dem Display 8 des Smartphones 1 angezeigt werden und dieser jene je nach Bedürfnis anwählen kann.

## Patentansprüche

1. Verfahren zum Bereitstellen maschinenspezifischer Handlungsoptionen, insbesondere Serviceoptionen, und/oder Informationen für eine Werkzeugmaschine zur Bearbeitung von Werkstücken, die bevorzugt zumindest teilweise aus Holz, Holzwerkstoffen, Kunststoff oder dergleichen bestehen, mit den Schritten:
Detektieren einer Maschinenkennung mittels eines Endgerätes;
Übermitteln der detektierten Maschinenkennung von dem Endgerät an ein virtuelles Serviceportal über ein Datenübertragungssystem, insbesondere über eine Datenleitung und besonders bevorzugt über eine Internetleitung;
Erzeugen von maschinenspezifischen Handlungsoptionen und/oder Information in dem virtuellen Serviceportal auf Basis der durch die Maschinenkennung identifizierten Maschine;
Übermitteln der erzeugten maschinenspezifischen Handlungsoptionen und/oder Informationen an das Endgerät und Anzeige von zumindest einem Teil dieser auf dem Endgerät.

2. Verfahren nach Anspruch 1, **dadurch gekennzeichnet, dass** die Maschinenkennung ein Bildcode, insbesondere QR-Code, ist und der Bildcode über eine Kamera des Endgeräts detektiert wird.

3. Verfahren nach Anspruch 1 oder 2, **dadurch gekennzeichnet, dass** das Endgerät ein mobiles Endgerät, insbesondere Mobiltelefon, Smartphone oder Tabletcomputer, ist.

4. Verfahren nach einem der vorherigen Ansprüche, **dadurch gekennzeichnet, dass** die erzeugten maschinenspezifischen Handlungsoptionen und/oder Informationen eine maschinenspezifische Servicerufnummer umfassen.

5. Verfahren nach Anspruch 2 und 3 oder 4, **dadurch gekennzeichnet, dass** die erzeugten maschinenspezifischen Handlungsoptionen und/oder Informationen eine Bildübertragungsoption von dem mobilen Endgerät an eine Servicestelle, die bevorzugt durch die maschinenspezifische Servicerufnummer kontaktierbar ist, umfassen, wobei die Bildübertragung bevorzugt in Echtzeit während eines Servicetelefonates mit dieser Servicestelle erfolgt.

6. Verfahren nach einem der vorherigen Ansprüche, **dadurch gekennzeichnet, dass** die erzeugten maschinenspezifischen Handlungsoptionen und/oder Informationen eine Zusammenstellung maschinenspezifischer Ersatzteile und bevorzugt eine Bestellmöglichkeit derer umfassen.

7. Verfahren nach einem der vorherigen Ansprüche, **dadurch gekennzeichnet, dass** die erzeugten maschinenspezifischen Handlungsoptionen und/oder Informationen eine Option zur standardisierten Störungserfassung der Maschine umfassen.

8. Verfahren nach einem der vorherigen Ansprüche, **dadurch gekennzeichnet, dass** die erzeugten maschinenspezifischen Handlungsoptionen und/oder Informationen Wartungs- und/oder Inspektionsanweisungen umfassen.

9. Verfahren nach einem der vorherigen Ansprüche, **dadurch gekennzeichnet, dass** die erzeugten maschinenspezifischen Handlungsoptionen und/oder Informationen eine Option zur Maschinensteuerung der Maschine umfassen.

10. Verfahren nach einem der vorherigen Ansprüche, **dadurch gekennzeichnet, dass** die erzeugten maschinenspezifischen Handlungsoptionen und/oder Informationen eine Option zum automatischen Erzeugen einer Serviceanfrage umfassen.

11. Verfahren nach einem der vorherigen Ansprüche, **dadurch gekennzeichnet, dass** die erzeugten maschinenspezifischen Handlungsoptionen und/oder Informationen Maschinenkennzahlen und/oder Auslastungsprofile der Maschine umfassen.

12. Verfahren nach einem der vorherigen Ansprüche, **dadurch gekennzeichnet, dass** die erzeugten maschinenspezifischen Handlungsoptionen und/oder Informationen Informationen und/oder Neuigkeiten des Maschinenherstellers und/oder eines verwandten Unternehmens der Maschine umfassen.
